# EUROPÄISCHE PATENTSCHRIFT

(11) **EP 1 920 584 B1**
(45) Veröffentlichungstag und Bekanntmachung des Hinweises auf die Patenterteilung: **02.06.2010**
(21) Anmeldenummer: 06777922.3
(22) Anmeldetag: 24.07.2006
(51) Int. Cl.: H04M 1/725, H04M 1/247

(54) **VERFAHREN, KOMMUNIKATIONSSYSTEM UND ENDEINRICHTUNG ZUM BELEGEN EINER TASTE UND EINES ANZEIGEFELDES EINER ENDEINRICHTUNG**
METHOD, COMMUNICATION SYSTEM, AND TERMINAL FOR OCCUPYING A KEY AND DISPLAY FIELD OF A TERMINAL
PROCEDE, SYSTEME DE COMMUNICATION ET TERMINAL POUR OCCUPER UNE TOUCHE ET UN CHAMP D'AFFICHAGE D'UN TERMINAL

(30) Priorität: 31.08.2005 DE 102005041367
(43) Veröffentlichungstag der Anmeldung: 14.05.2008
(73) Patentinhaber: Siemens Enterprise Communications GmbH & Co. KG, 81379 München (DE)
(72) Erfinder: LEDERER, Thomas, 82211 Herrsching (DE); SCHAADE, Stephan, 86807 Buchloe (DE)
(74) Vertreter: Fritzsche, Thomas
(86) Internationale Anmeldenummer: PCT/EP2006/064564
(87) Internationale Veröffentlichungsnummer: WO 2007/025804

(56) Entgegenhaltungen:
- EP-A2- 0 808 049
- EP-A2- 1 220 518
- EP-A2- 1 505 813
- WO-A-98/48554
- WO-A1-02/39681
- US-A1- 2004 141 599

## Beschreibung

Heute übliche Tastentelefone in Sprach-Kommunikationssystemen bieten überwiegend die Möglichkeit, Funktionstasten so zu belegen oder zu programmieren, dass durch Drücken der Funktionstaste eine Verbindung zu einer vorher für die Funktionstaste abgespeicherten Rufnummer aufgebaut wird. Derartige Funktionstasten werden häufig als frei belegbare Tasten, Namenstasten, Zielwahltasten oder Repertory-Dialing-Tasten bezeichnet.

Zu Programmierung einer Funktionstaste sind dabei häufig gewisse, telefon- oder vermittlungsanlagen-spezifische Bedienschritte durchzuführen. Die Zuordnung einer programmierten Zielwahltaste zu einer Rufnummer wird dabei üblicherweise durch manuelle Beschriftung mit Stift auf einem Papier-Beschriftungsstreifen des Telefons durch den Benutzer kenntlich gemacht.

Weiterhin gibt es moderne Telefone, deren Tasten jeweils ein LCD- oder LED-Anzej.gedisplay (LED: Light-Emitting Diode; LCD: Liquid Crystal Display) zugeordnet ist, auf dem die gespeicherte Rufnummer der programmierten Zielwahltaste als elektronische Tastenbeschriftung angezeigt werden kann. Eine manuelle Beschriftung der Tasten ist für diese Telefone nicht nötig. Derartige Funktionstasten mit Anzeigedisplay werden häufig als selbstbeschriftende Tasten oder als Self-Labeling Keys bezeichnet.

Ein Setzen des Anzeigedisplays für eine Taste wird dabei in bekannten Kommunikationssystemen im Rahmen der Programmierung der Funktionstaste durchgeführt. Beispielsweise wird nach der Programmierung einer zielwahltaste die, der Zielwahltaste zugeordnete Rufnummer im Anzeigedisplay der Zielwahltaste angezeigt. Darüber hinaus wird im Rahmen der Programmierung der Zielwahltasten dem Benutzer häufig ermöglicht, die elektronische Tastenbeschriftung über eine Bedienschnittstelle manuell zu editieren, indem der Benutzer einen Text oder beispielsweise den Namen des Teilnehmers der gespeicherten Zielrufnummer eingeben kann. Daraufhin kann dieser Name an Stelle der Rufnummer auf dem Anzeigedisplay der Zielwahltaste angezeigt wird.

In der Patentanmeldung US 2004/141599 A1 ist die automatische Belegung einer programmierbaren Kurzwahltaste aufgrund eines so genannten Triggers beschrieben. Ein Trigger kann beispielsweise der Empfang einer E-Mail Nachricht sein, die Suche in einer Telefonbuch Datenbank, die Prüfung einer Webseite, oder das Gespräch mit jemandem am Mobiltelefon. Die Belegung einer Taste aufgrund einer Benutzereingabe bei einer initiierten Kommunikationsverbindung ist aber nicht vorgesehen. Darüber hinaus ist nicht bekannt, dass gleichzeitig mit der Belegung der Taste eine Teilnehmer-Information einem Anzeigefeld dauerhaft zugewiesen werden könnte.

In der Patentanmeldung EP-A2-1 5005 813 ist ein Verfahren beschrieben, bei dem ein einer Kurzwahltaste zugeordnetes Anzeigeelement abhängig von einem Erreichbarkeitsstatus gesteuert wird. Das Anzeigelement kann eine Leuchtdiode oder ein sogenanntes Self-Labeling-Display sein. Es ist kein Hinweis zu finden, dass es sich bei der Belegung der Taste um eine Adresse handelt, die im Rahmen einer initiierten Kommunikationsverbindung erfasst wird. Darüber hinaus hängt der Betriebszustand des Anzeigeelementes von Eingaben desjenigen Nutzers ab, der das über die Kurzwahltaste erreichbare Endgerät benutzt.

In der Patentanmeldung WO 98/48554 A ist ein Verfahren zum Erleichtern der Erfassung von CLID-Informationen beschrieben, wobei der Name und die Adresse eines anrufenden Teilnehmers auf dem Display angezeigt werden. Der Benutzer kann diese CLID-Information per Drag-and-Drop ziehen und auf eine gewünschte Applikation fallen lassen, die die Information automatisch aufnimmt. Die Applikation kann ein lokales Teilnehmerverzeichnis oder ein beliebiges Programm sein. Hierbei ist die Belegung einer Taste jedoch nicht berücksichtigt. Darüber hinaus weist das vorgestellte Endgerät keine belegbare Taste auf.

Es ist Aufgabe der Erfindung ein Verfahren anzugeben, bei dem eine Belegung einer Funktionstaste und eines der Funktionstaste zugeordneten Anzeigefeldes einer Endeinrichtung vereinfacht wird. Weiterhin ist es Aufgabe der Erfindung eine Endeinrichtung und ein Kommunikationssystem zur Durchführung des Verfahrens anzugeben.

Gelöst wird diese Aufgabe durch ein Verfahren mit den Merkmalen des Patentanspruchs 1, durch ein Kommunikationssystem mit den Merkmalen des Patentanspruchs 10, sowie durch eine Endeinrichtung mit den Merkmalen des Patentanspruchs 11.

Vorteilhafte Ausführungsformen und Weiterbildungen der Erfindung sind in den abhängigen Ansprüchen angegeben.

Bei dem erfindungsgemäßen Verfahren zum Belegen einer Taste und eines der Taste zugeordneten Anzeigefeldes einer ersten Endeinrichtung, bei dem eine Kommunikationsverbindung zwischen der ersten Endeinrichtung eines ersten Teilnehmers und einer zweiten Endeinrichtung eines zweiten Teilnehmers initiiert wird, wird infolge einer Benutzereingabe des ersten Teilnehmers, eine die zweite Endeinrichtung im Rahmen der Kommunikationsverbindung identifizierende Adresse erfasst. Die erfasste Adresse wird der Taste als Ziel-Adresse für einen zukünftigen Verbindungsaufbau zugewiesen. Für die erfasste Adresse wird zusätzlich automatisch eine zugehörige Teilnehmer-Information ermittelt, und die ermittelte Teilnehmer-Information dem Anzeigefeld zugewiesen.

Die Taste kann dabei insbesondere eine Zielwahltaste, Direktruftaste oder eine wahlwiederholungstaste, das der Taste zugeordnete Anzeigefeld insbesondere eine LED- oder LCD-Text-Zeile sein. Endeinrichtungen können vorzugsweise ein Kommunikationsendgerät, ein Telefon und/oder ein so genannter Soft-Client eines leitungsvermittelten oder paketorientierten Kommunikationssystems - insbesondere ein Echtzeitkommunikationssystem für Sprache - sein, wobei ein Soft-Client eine auf einer Dateneinrichtung ablaufende Telefonapplikation darstellt. Die Adresse kann insbesondere eine Rufnummer sein, während die Teilnehmer-Information vorzugsweise eine textuelle Beschreibung einer Rufnummer - insbesondere ein Name eines Teilnehmers der zweiten Endeinrichtung - sein kann.

Die Teilnehmer-Information kann dabei insbesondere aus einer, in bekannten Kommunikationssystemen vorhandenen Signalisierung extrahiert, von der ersten Endeinrichtung bei einem diese steuerndes Kommunikationssystem abgefragt und/oder aus einer Datenbank ausgelesen werden.

Die Kommunikationsverbindung kann insbesondere eine aufgebaute Verbindung ausgehend von der ersten zur zweiten Endeinrichtung, eine aufgebaute Verbindung ausgehend von der zweiten zur ersten Endeinrichtung, und auch eine noch im Verbindungsaufbau befindliche Kommunikationsverbindung zwischen der ersten Endeinrichtung und der zweiten Endeinrichtung sein.

Die Benutzereingabe kann insbesondere sowohl eine Auswahl einer Funktion an der ersten Endeinrichtung, beispielsweise eine Menüauswahl und/oder ein Tastendruck, als auch ein Selektieren eines Menüeintrags oder ein Auslösen einer Schaltfläche einer grafischen Oberfläche eines Soft-Clients oder einer, der Endeinrichtung zugeordneten Administrationssoftware sein.

Die Erfindung erlaubt vorteilhafterweise ein schnelles und einfaches Setzen eines einer Taste zugeordneten Anzeigefeldes mit erheblich weniger manuell durchzuführenden Schritten. Insbesondere ein, bei bekannten Endeinrichtungen häufig umständliches Eingeben von alphabetischen Zeichen oder Sonderzeichen über ein mehrfach belegtes Zahlen-Eingabefeld kann vermieden werden.

In einer vorteilhaften Weiterbildung der Erfindung kann die Ermittlung der Teilnehmer-Information für die erfasste Kommunikationssystem-Adresse über einen Zugriff auf einen Directory-Service, insbesondere über einen LDAP-Zugriff (LDAP: Lightweight Directory Access Protocol), erfolgen. Dies ist insbesondere vorteilhaft, als dass Firmen häufig Mitarbeiterdaten wie Name, Rufnummer, Mitarbeiternummer, E-Mail-Adresse, usw. zentral in einer Datenbank eines Directory-Service ablegen und diese Daten als Teilnehmer-Information verwendet werden können. Somit kann für die Erfindung eine, ursprünglich für andere Zwecke eingerichtete Datenbank ausgelesen werden. Dies reduziert den Konfigurationsaufwand und reduziert Fehlermöglichkeiten durch veraltete Teilnehmer-Daten oder durch fehlerbehaftetes, manuelles Pflegen der Teilnehmer-Daten.

Ein Zugriff auf den Directory-Service kann dabei durch die erste Endeinrichtung oder durch eine zentrale Kommunikationseinrichtung, wie eine Vermittlungsanlage oder einen Gatekeeper erfolgen.

Weiterhin ist bekannt, dass Endeinrichtungen von Mitarbeitern einer Firma oder Organisation häufig durch verschiedene, miteinander vernetzte Kommunikationseinrichtungen gesteuert werden, und Informationen wie ein Name eines Teilnehmers üblicherweise nur in einer der Kommunikationseinrichtungen konfiguriert sind und somit der ersten Endeinrichtung nicht in jedem Fall zur Verfügung stehen. Daher ist es vorteilhaft, dass durch Abfrage beim Directory-Service eine aufwendige Inter-Kommunikationseinrichtung-Kommunikation zur Ermittlung der Teilnehmer-Information nicht nötig wird.

Die Verwendung eines Directory-Services ist weiterhin vorteilhaft, als dass in der Datenbank des Directory-Services kommunikationssystem-unabhängige Datensätze vorhanden sein können. Insbesondere die Datensätze von firmen-externen Kontakten oder alternative Teilnehmer-Rufnummern wie Mobilfunknummern, die nicht im Kommunikationssystem konfiguriert sind, können in der Datenbank gespeichert werden und somit für die Beschriftung des Anzeigefeldes ausgelesen und verwendet werden.

In einer weiteren vorteilhaften Weiterbildung der Erfindung kann die Taste mehrfach belegbar sein, beispielsweise auf zwei Ebenen, wobei die zweite Ebene über eine Umschalt- oder Shift-Taste angesprochen und/oder aktiviert wird. Auf der zweiten Ebene kann der Taste nun eine zweite Adresse zugewiesen werden. Eine, der zweiten Adresse zugeordnete, zweite Teilnehmer-Information kann dem Anzeigefeld zugewiesen werden. Diese zweite Teilnehmer-Information kann vorzugsweise dann angezeigt werden, sobald die Umschalttaste gedrückt wird. Die Belegung der Taste und des Anzeigefeldes kann dabei für beide Ebenen gemeinsam durch die Benutzereingabe erfolgen.

In einer vorteilhaften Ausführungsform dieser Weiterbildung kann auf einer ersten Ebene einer Taste und eines Anzeigefeldes eine konfigurierte Rufnummer eines Teilnehmers in einem Kommunikationssystem verwendet werden, während der zweiten Ebene der Taste und des Anzeigefeldes eine Mobilfunknummer des Teilnehmers zugeordnet wird.

In einer weiteren vorteilhaften Weiterbildung der Erfindung kann die ermittelte Teilnehmer-Information dem Anzeigefeld editierbar zugewiesen werden. Hierbei besteht für einen Teilnehmer die Möglichkeit die Teilnehmer-Information an der Endeinrichtung selbst oder auf einer auf einem Rechner ablaufenden Applikation zu verändern. So kann er beispielsweise bei einer Mobilfunknummer manuell die Zeichenkette "mobil" an die Teilnehmer-Information anhängen, um eine Mobilfunknummer von einer Festnetznummer unterscheidbar zu machen.

Beim erfindungsgemäßen Verfahren gemäß des Patentanspruchs 1 zur Belegung eines, einer Taste zugeordneten Anzeigefeldes mindestens einer Endeinrichtung, wird für die jeweilige Endeinrichtung für mindestens eine Taste eine zugewiesene Adresse der jeweiligen Taste erfasst. Für die erfasste, zugewiesene Adresse wird eine zugehörige, weitere Teilnehmer-Information ermittelt, und die ermittelte weitere Teilnehmer-Information wird einem Anzeigefeld der jeweiligen Taste zugewiesen.

Somit lassen sich vorteilhafterweise Teilnehmer-Informationen vieler oder aller Endeinrichtungen in einem Kommunikationssystem aktualisieren. Vorzugsweise kann ein automatischer Ablauf automatisiert und regelmäßig ausgeführt werden um somit sicherzustellen, dass die Teilnehmer-Informationen selbst bei Namensänderungen stets aktualisiert werden.

Ein Ausführungsbeispiel der Erfindung wird nachfolgend anhand der Zeichnung näher erklärt.

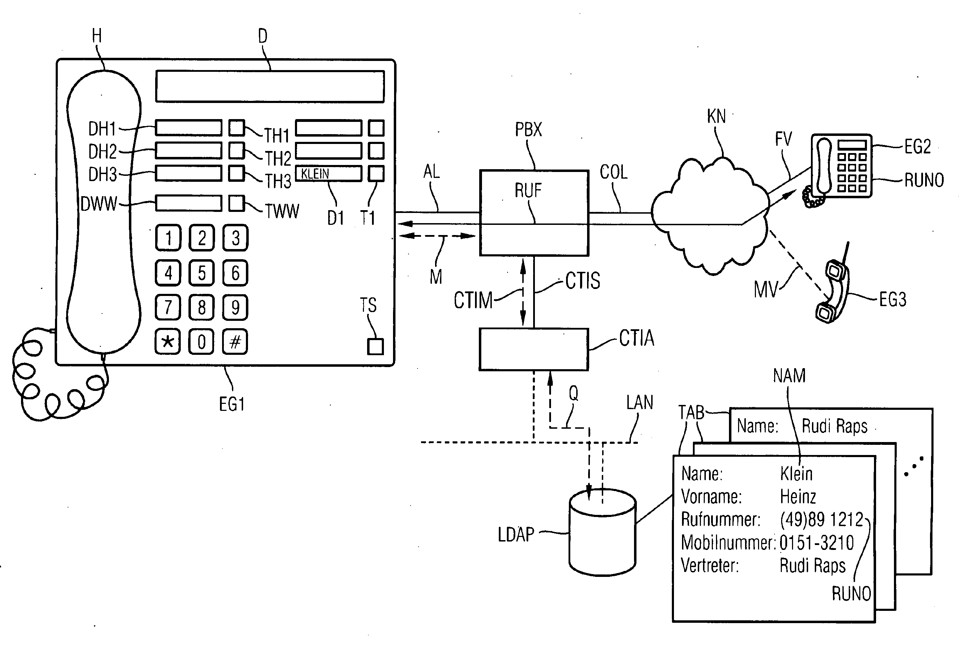

Dabei zeigt in schematischer Darstellung die
- Figur 1: ein Kommunikationssystem zur Durchführung des erfindungsgemäßen Verfahrens.

Die Figur 1 zeigt in schematischer Darstellung ein Kommunikationssystem zur Echtzeitkommunikation mit einer als Rechteck dargestellten Vermittlungsanlage PBX und einem, über eine Anschlussleitung AL an die Vermittlungsanlage PBX angekoppelten, ersten Telefon EG1 als erste Endeinrichtung. Weiterhin ist an die Vermittlungsanlage PBX über eine Amtsleitung COL und über ein - als Wolke stilisiertes - Kommunikationsnetz KN ein zweites Telefon EG2 als zweite Endeinrichtung angeschlossen. Dem zweiten Telefon EG2 ist eine Rufnummer RUNO als Adresse zugeordnet. Des Weiteren ist ein drittes Telefon EG3 mit einer zugeordneten - nicht dargestellten - zweiten Rufnummer als zweite Adresse an das Kommunikationsnetz KN angeschlossen.

Die Anschlussleitung AL zur Kopplung des ersten Telefons EG1 innerhalb eines Firmennetzes und die Amtsleitung COL zur Kopplung von Endeinrichtungen (EG2,EG3) von außerhalb des Firmennetzes sind dabei als durchgehende Linien dargestellt. Eine Festnetzverbindung FV zwischen dem Kommunikationsnetz KN und dem zweiten Telefon EG2 wird ebenfalls als durchgehende Linie dargestellt, eine Mobilfunkverbindung MV zwischen dem dritten Telefon EG3 und dem Kommunikationsnetz KN als gestrichelte Linie.

Das erste Telefon EG1 ist eine Endeinrichtung eines ersten Teilnehmers, das zweite sowie das dritte Telefon EG2, EG3 sind Endeinrichtungen eines zweiten Teilnehmers.

An die Vermittlungsanlage PBX ist weiterhin eine CTI-Applikation CTIA (CTI: Computer Telephony Integration) gekoppelt und an diese wiederum ein als Zylinder veranschaulichter Directory-Service LDAP. Die CTI-Applikation CTIA und der Directory-Service LDAP sind dabei über ein, durch eine gepunktete Linie veranschaulichtes, lokales Netzwerk LAN miteinander vernetzt.

Die Kopplung zwischen der CTI-Applikation CTIA und der Vermittlungsanlage PBX erfolgt über eine, als durchgehende Linie zwischen diesen beiden Komponenten dargestellte CTI-Schnittstelle CTIS.

In Figur 1 ist das erste Telefon EG1 als Tastentelefon dargestellt, mit Zielwahltasten T1, TH1, TH2, TH3, ein Wahlwiderholdungstaste TWW und eine Umschalttaste TS zum Ansprechen einer zweiten Ebene für die Zielwahltasten T1, TH1, TH2, TH3. Den Zielwahltasten T1, TH1, TH2, TH3 und der Wahlwiederholungstaste TWW ist jeweils ein elektronisches Anzeigefeld zugeordnet. Dabei ist ein Anzeigfeld D1 der Zielwahltaste T1, ein Anzeigefeld DH1 der Zielwahltaste TH1, ein Anzeigefeld DH2 der Zielwahltaste TH2, ein Anzeigefeld DH3 der Zielwahltaste TH3 und ein Anzeigefeld DWW der Zielwahltaste TWW zugeordnet. Zueinander gehörige - als Rechtecke dargestellte - Anzeigefelder und - als Rechtecke dargestellte - Tasten sind in Figur 1 jeweils direkt nebeneinander angeordnet. Weiterhin ist für das erste Telefon EG1 ein Telefonhörer H und ein Telefondisplay D stilisiert dargestellt.

Meldungen und Datenverbindungen zwischen den vorstehend genannten Komponenten sind durch gestrichelte Doppelpfeillinien dargestellt. Dies sind insbesondere eine Tastendruckmeldung M zwischen dem ersten Telefon EG1 und der Vermittlungsanlage PBX, eine CTI-Meldung CTIM zwischen der Vermittlungsanlage PBX und der CTI-Applikation CTIA und eine Abfrage-Meldung Q der CTI-Applikation CTIA beim Directory-Service LDAP.

Eine leitungsorientierte oder paketbasierte Sprach-Kommunikationsverbindung RUF als erfindungsgemäße Kommunikationsverbindung zwischen dem ersten Telefon EG1 und dem zweiten Telefon EG2 über die Vermittlungsanlage PBX ist durch einen durchgehenden Doppelpfeil dargestellt.

Eine Teilnehmertabelle TAB einer Datenbank des Directory-Services LDAP ist durch diagonal versetzte, überlappende Rechtecke veranschaulicht, wobei ein Rechteck einen jeweiligen Datensatz der Teilnehmertabelle TAB repräsentiert. Beispielhaft ist ein Datensatz mit folgenden Daten innerhalb eines der Rechtecke angegeben:

| | |
|---|---|
| Name: | Klein |
| Vorname: | Heinz |
| Rufnummer: | (49)891212 |
| Mitarbeiternummer: | 3210 |
| Mobilnummer: | 0151-3210 |
| Vertreter: | Rudi Raps |

Weiterhin ist in Figur 1 angedeutet, dass für "Rudi Raps" ein weiterer Eintrag in der Teilnehmertabelle TAB konfiguriert ist.

Es sei angenommen, dass in der Teilnehmertabelle TAB des Directory-Services LDAP für jeden konfigurierten Teilnehmer der vermittlungsanlage PBX ein Datensatz existiert. Weiterhin sei angenommen, dass auch vermittlungsanlagen-externe Kontakte, wie der Teilnehmer "Heinz Klein", dem das zweite Telefon EG2 und das dritte Telefon EG3 zugeordnet sei, in der Teilnehmertabelle TAB konfiguriert sind.

Ausgangssituation in Figur 1 ist die aufgebaute Sprach-Vebindung RUF zwischen einem ersten Teilnehmer über dessen erstes Telefon EG1 und einem zweiten Teilnehmer mit dessen zweiten Telefon EG2. Während die Sprach-Verbindung RUF durchgeführt wird oder noch während des Verbindungsaufbaus der Sprach-Verbindung RUF bildet sich bei dem ersten Teilnehmer der Wunsch, die Rufnummer des zweiten Telefons EG2 auf der Zielwahltaste T1 zu speichern um den zweiten Teilnehmer später einfacher anwählen zu können. Zur Programmierung der Zielwahltaste T1 drückt der erste Teilnehmer nun auf endgeräte-spezifische Weise die Zielwahltaste T1 - z.B. durch mehrsekündiges Drücken oder durch vorherige Auswahl eines Endgeräte-Menüs - und führt somit eine Benutzereingabe am ersten Telefon EG1 durch.

Infolge dieser Benutzereingabe des ersten Teilnehmers wird die Tastendruckmeldung M vom ersten Telefon EG1 zur Vermittlungsanlage PBX übermittelt. Daraufhin wird ein Leistungsmerkmal in der Vermittlungsanlage PBX aktiviert, in dessen Rahmen die CTI-Meldung CTIM von der Vermittlungsanlage PBX zur CTI-Applikation CTIA über die CTI-Schnittstelle CTIS übermittelt wird. Die CTI-Meldung CTIM umfasst vorzugsweise die erfasste Rufnummer RUNO des zweiten Telefons EG2 als die das zweite Telefon EG2 identifizierende Adresse RUNO der Sprach-Verbindung RUF und eventuell weitere vermittlungsanlagen- und/oder verbindungsspezifische Daten. Die Kopplung über die CTI-Schnittstelle CTIS erfolge dabei insbesondere mittels des von der ECMA (European Computer Manufacturers Association) standardisierten CSTA-Protokolls (CSTA: Computer Supported Telecommunications Application), über das die CTI-Applikation CTIA über Zustände und Zustandswechsel der Vermittlungsanlage PBX informiert wird.

Die CTI-Applikation CTIA kann dabei auf einem eigenen Rechner, in der Vermittlungsanlage PBX oder auf einem nicht dargestellten Arbeitsplatzrechner ablaufen. Die CTI-Applikation CTIA erfasst die in der CTI-Meldung CTIM übermittelte Rufnummer RUNO des zweiten Telefons EG2. Diese sei im vorliegenden Ausführungsbeispiel die Rufnummer 089-1212.

In einem darauf folgenden Verfahrensschritt wird durch die CTI-Applikation CTIA die erfasste Rufnummer RUNO in ein einheitliches Format gewandelt, z.B. als so genannte vollqualifizierte Rufnummer, in ein so genanntes kanonisches Adressformat oder in ein Format mit Landeskennzahl, Ortsnetzkennzahl, Anlagennummer und/oder Nebenstellennummer. Dies ist für die Rufnummer RUNO des zweiten Telefons EG2 im vorliegenden Ausführungsbeispiel (49)891212.

Durch Abfrage dieser - eventuell gewandelten - Rufnummer RUNO mittels einer Abfrage-Meldung Q werden durch den Directory-Service LDAP zu der erfassten Rufnummer RUNO über die Teilnehmertabelle TAB zugehörige Daten ausgelesen und an die CTI-Applikation CTIA zurückgeliefert. Dies ist für den vorstehend angegeben Datensatz der Name "Klein" als Teilnehmer-Information NAM. Weiterhin kann auch eine Mobilfunknummer zurückgeliefert werden - für den angegebenen Beispieldatensatz "0151-3210" - oder die Angabe eines Vertreters für den Teilnehmer (im Ausführungsbeispiel sei "Rudi Raps" Vertreter von "Heinz Klein"). Optional kann auch für den Vertreter eine Rufnummer und ein Name ermittelt werden.

Der Directory-Service LDAP basiert dabei vorzugsweise auf einer Datenbank mit Verzeichnisstruktur, wobei ein Zugriff über das LDAP-Protokoll erfolgt. Vorzugsweise ist die Datenbank Teil eines so genannten User-Management-Systems, der alle Mitarbeiter einer Firma - z.B. der erste Teilnehmer - und auch externe Kontaktpersonen - z.B. der zweite Teilnehmer - zentral im Firmennetz verwaltet und über das LDAP-Protokoll einen standardisierten Zugriff auf diese Daten anbietet.

Nachdem die CTI-Applikation CTIA den Teilnehmer-Namen NAM und optional auch die Mobilfunknnumer und Vertreter-Informationen erfasst hat, schickt die CTI-Applikation CTIA diese Daten mittels Quittungsmeldungen bezüglich den vorstehend genannten Meldungen Q, CTIM und M über die Vermittlungsanlage PBX an das erste Telefon EG1.

Das erste Telefon EG1 erhält somit den Namen (NAM) des zweiten Teilnehmers und falls noch nicht geschehen auch die Rufnummer RUNO von der Vermittlungsanlage PBX und weist nun die Rufnummer RUNO des zweiten Telefons EG2 der Zielwahltaste T1 als Ziel-Adresse für einen zukünftigen Verbindungsaufbau, sowie den erhaltenen Namen NAM dem der Zielwahltaste T1 zugehörigem Anzeigefeld D1 zu. Der Name NAM wird daraufhin im Anzeigefeld D1 angezeigt.

Mit den vorstehend aufgeführten Verfahrensschritten werden die Programmierung einer Zielwahltaste und die Belegung eines Tasten-Anzeigefeldes vereinfacht und weniger fehleranfällig, da weniger manuelle Schritte als üblicherweise durchgeführt werden. Weiterhin ergeben sich auch eine Zeiteinsparung und eine Effizienzsteigerung bei der Zuweisung von Zielrufnummern. Darüber hinaus lässt das Verfahren in einen bestehenden, so genannten Workflow optimal integrieren. Flexible Erweiterungsmöglichkeiten des Verfahrens werden beispielhaft im Folgenden erläutert.

In einer erfindungsgemäßen Erweiterung, kann die Zielwahltaste T1 über die Umschalttaste TS auf zwei oder mehreren Ebenen belegt werden. Hierbei kann insbesondere ein automatisches Belegen der zweiten Ebene gemeinsam mit der Belegung der ersten Ebene erfolgen. Beispielsweise wird die vorstehend erwähnte Mobilfunknummer des dritten Endgeräts EG3 zusammen mit dem Namen NAM des zweiten Teilnehmers von der CTI-Applikation CTIA an das erste Telefon EG1 übermittelt. Im ersten Telefon EG1 wird nun auf die erste Ebene der Zielwahltaste T1 die Rufnummer RUNO des zweiten Endgerätes EG2 gespeichert und auf der zweiten Ebene die Mobilfunknummer des dritten Endgeräts EG3. Der ersten Ebene des Anzeigefeldes D1 wird der Name (NAM) des zweiten Teilnehmers zugeordnet und angezeigt. Der zweiten Ebene des Anzeigefeldes wird darüber hinaus der Name (NAM) des zweiten Teilnehmers, beispielsweise mit dem Textzusatz "mobil", zugeordnet und bei Aktivierung durch die Umschalttaste T5 angezeigt.

In einer weiteren Ausführungsform wird zusammen mit dem Namen (NAM) des zweiten Teilnehmers eine Rufnummer und ein Name eines Vertreters des zweiten Teilnehmers von der CTI-Applikation CTIA an das erste Endgerät EG1 übermittelt. In Figur 1 sei dies der Teilnehmer "Rudi Raps". Wiederum wird im ersten Telefon EG1 auf die erste Ebene der Zielwahltaste T1 die Rufnummer (RUNO) des zweiten Endgerätes EG2 gespeichert. Der zweiten Ebene wird nun die Rufnummer des Vertreters übermittelt. Der ersten Ebene des Anzeigefeldes D1 wird der Name (NAM) des zweiten Teilnehmers zugeordnet und angezeigt. Der zweiten Ebene des Anzeigefeldes wird darüber hinaus der Name des Vertreters zugeordnet und bei Aktivierung durch die Umschalttaste TS angezeigt.

In einer verallgemeinerten Darstellung können mehrere Ebenen einer Taste mit unterschiedlichen Rufnummern belegt werden und entsprechend dazu ein Anzeigefeld. Beispielsweise kann auf der ersten Ebene der Taste die Rufnummer RUNO des zweiten Telefons EG2, auf der zweiten Ebene der Taste die zweite Rufnummer des dritten Telefons EG3 und auf einer dritten Ebene eine Rufnummer des Vertreters "Rudi Raps" abgespeichert werden. Dem Anzeigefeld kann entsprechend auf der ersten Ebene die Zeichenkette "Heinz Klein", auf der zweiten Ebene die Zeichenkette "Heinz Klein mobil" und auf einer dritten Ebene "Rudi Raps" zugeordnet werden.

Analog kann eine Belegung der Wahlwiederholungstaste TWW und des zugehörigen Anzeigefeldes DWW erfolgen. Einziger Unterschied zur Belegung der Zielwahltaste T1 und des Anzeigefeldes D1 ist hierbei, dass die Belegung der Wahlwiederholungstaste TWW infolge einer Benutzereingabe des ersten Teilnehmers neben den erwähnten Mechanismen auch automatisch stattfinden kann, indem das Beenden einer Verbindung z.B. durch Auflegen eines Telefonhörers oder durch Drücken einer Trennen-Taste die Benutzereingabe darstellt.

In einer Erweiterung des Verfahrens können die Zielwahltasten TH1, TH2, TH3 dergestalt belegt werden, dass sie automatisch mit Zielrufnummer belegt werden, für die am häufigsten Verbindungen vom beziehungsweise zum ersten Telefon EG1 durchgeführt werden. Dies ist analog zu einer Liste von zuletzt geöffneten Dateien zu verstehen, wie sie Software-Applikationen häufig anbieten. Beispielsweise können alle durchgeführten Gespräche eines Zeitraums in der Vermittlungsanlage protokolliert werden und nach Ablauf des Zeitraums ausgewertet werden. In einem so genannten Batch-Lauf können dann gemäß der Auswertung für die drei Zielwahltasten TH1, TH2, TH3 und ihren jeweiligen Anzeigefeldern DH1, DH2, DH3 die jeweilige Zielwahltaste und das jeweilige Anzeigefeld nach den vorstehend erläuterten Verfahrensschritten gesetzt werden, wobei der Zielwahltaste TH1 die Rufnummer des häufigsten Kommunikationspartners, der Zielwahltaste TH2 die Rufnummer des zweithäufigsten Kommunikationspartners und der Zielwahltaste TH3 die Rufnummer des dritthäufigsten Kommunikationspartners zugewiesen wird.

Die Telefone EG1, EG2, EG3 im vorliegenden Ausführungsbeispiel können Endgeräte oder Software-Telefonanwendungen der Vermittlungsanlage PBX oder vermittlungsanlagen-externe Endeinrichtungen sein. Dabei beruht die vorteilhafte Einbeziehung von vermittlungsanlagen-externen Telefonen darauf, dass die Teilnehmertabelle TAB auch für die externen Rufnummern der externen Telefone konfiguriert sein kann. Vorteilhafterweiser verringert sich dadurch die Anzahl der Fälle, in denen eine Teilnehmer-Information aufgrund eines fehlenden entsprechenden Eintrags in der Teilnehmertabelle TAB nicht ermittelt werden kann.

Weiterhin existiert vorzugsweise eine eins-zu-eins-Zuordnung einer Rufnummer einer Endeinrichtung eines Teilnehmers zu einem Teilnehmer und zu dessen Namen, um somit eine Abfrage der Teilnehmertabelle TAB zu erleichtern.

Weiterhin kann das Verfahren so umgesetzt werden, dass die Teilnehmer-Information auf dem Anzeigefeld infolge der erfindungsgemäßen Benutzereingabe angezeigt wird, sowie in einem Ruhezustand der Endeinrichtung. Die Anzeige des Anzeigefeldes und die Belegung der Taste kann dabei lediglich temporär für diese Betriebszustände gelten, während infolge eines anderen Betriebszustandes, Z.B. eine Durchschaltung einer Verbindung, eine anderweitige Belegung der Taste und des Anzeigefeldes aktiviert werden kann. Auf diese Weise wird dem Teilnehmer stets eine optimale, an die Verbindungssituation angepasste Belegung der Tasten angeboten.

Weiterhin kann das Anzeigefeld in bestimmten Betriebszuständen dunkel geschaltet werden, in denen eine Auswahl einer Zielwahltaste nicht sinnvoll ist.

Während die Erfindung im Ausführungsbeispiel anhand einer Sprachverbindung zwischen zwei Sprachendgeräten erläutert wurde, kann es sich bei der Kommunikationsverbindung auch um eine Videoverbindung, um eine Videokonferenz oder um eine ähnliche Verbindung zwischen zwei oder mehreren Kommunikationspartnern handeln.

Alternativ zur dargestellten Kopplung zwischen CTI-Applikation CTIA und Directory-Service LDAP kann eine Endeinrichtung, insbesondere eine IP-basierte Endeinrichtung mit einer LAN-Schnittstelle dafür vorgesehen werden, eine direkte Kopplung, beispielsweise über das lokale Netzwerk LAN, zum Directory-Service LDAP aufzubauen. Hierbei können Schlüsseldaten zum Abfragen des Directory-Services LDAP direkt aus Verbindungsdaten und aus einem Meldungsverkehr vom bzw. zur Endeinrichtung extrahiert werden.

## Patentansprüche

1. Verfahren zum Belegen einer Taste (T1) und eines der Taste (T1) zugeordneten Anzeigefeldes (D1) einer ersten Endeinrichtung (EG1) eines ersten Teilnehmers, wobei
- eine eine zweite Endeinrichtung (EG2) identifizierende Adresse (RUNO) erfasst wird, die der Taste (T1) als Ziel-Adresse für einen zukünftigen Verbindungsaufbau zugewiesen wird
- für die erfasste Adresse (RUNO) eine zugehörige Teilnehmer-Information (NAM) ermittelt wird,
- die ermittelte Teilnehmer-Information (NAM) dem Anzeigefeld (D1) zugewiesen wird,
**dadurch gekennzeichnet, dass**
die Erfassung und Belegung infolge einer Benutzereingabe des ersten Teilnehmers erfolgen und
dass die Adresse (RUNO) im Rahmen einer mit der zweiten Endeinrichtung (EG2) initiierten Kommunikationsverbindung (RUF) erfasst wird, und
- dass die Adresse (RUNO) und die Teilnehmerinformation (NAM) über das Ende der Kommunikationsverbindung (RUF) hinaus der Taste (T1) bzw. dem Anzeigefeld (D1) zugewiesen bleiben.

2. Verfahren nach Anspruch 1, **dadurch gekennzeichnen, dass** die Ermittlung der Teilnehmer-Information (NAM) für die erfasste Adresse (RUNO) über einen Zugriff auf einen Directory-Service (LDAP) erfolgt.

3. Verfahren nach Anspruch 2,
**dadurch gekennzeichnet,**
**dass** der Zugriff auf den Directory-Service (LDAP) von der ersten Endeinrichtung (EG1) oder über eine, mit der ersten Endeinrichtung (EG1) gekoppelten CTI-Applikation (CTIA) erfolgt.

4. Verfahren nach einem der vorhergehenden Ansprüche,
**dadurch gekennzeichnet,**
**dass** die Taste (T1) in einer zweiten Ebene belegbar ist, und infolge der Benutzereingabe des ersten Teilnehmers,
i. für die erfasste Adresse (RUNO) eine zugehörige, zweite Teilnehmer-Information und eine zugehörige, zweite Adresse ermittelt wird,
ii. die ermittelte, zweite Adresse der zweiten Ebene der Taste (T1) als zweite Ziel-Adresse für einen zukünftigen Verbindungsaufbau zugewiesen wird, und
iii. die ermittelte, zweite Teilnehmer-Information dem Anzeigefeld (D1) für die zweite Ebene der Taste (T1) zugewiesen wird.

5. Verfahren nach Anspruch 4,
**dadurch gekennzeichnet,**
**dass** es sich bei der erfassten Adresse (RUNO) um eine Festnetzadresse und bei der ermittelten, zweiten Adresse um eine Mobilfunkadresse handelt.

6. Verfahren nach einem der vorhergehenden Ansprüche,
**dadurch gekennzeichnet,**
**dass** eine der ersten Endeinrichtung (EG1) zugeordnete, zentrale Kommunikationseinrichtung (PBX) einen Tasten-Speicher für die Taste (T1) mit der erfassten Adresse (RUNO) und der ermittelten Teilnehmer-Information (NAM) aktualisiert.

7. Verfahren nach einem der vorhergehenden Ansprüche,
**dadurch gekennzeichnet,**
**dass** ein Arbeitsplatzrechner der ersten Endeinrichtung (EG1) zugeordnet ist und die dem Anzeigefeld (D1) zugewiesene, ermittelte Teilnehmer-Information (NAM) auf einer Ausgabeeinheit des Arbeitsplatzrechner angezeigt wird.

8. Verfahren nach einem der vorhergehenden Ansprüche,
**dadurch gekennzeichnet,**
**dass** die ermittelte Teilnehmer-Information (NAM) dem Anzeigefeld (D1) editierbar zugewiesen wird und die Teilnehmer-Information (NAM) durch den ersten Teilnehmer modifizierbar ist und das Modifizieren durch eine weitere Benutzereingabe abgeschlossen wird.

9. Verfahren nach einem der vorhergehenden Ansprüche,
**dadurch gekennzeichnet,**
**dass** die dem Anzeigefeld (D1) zugewiesene Teilnehmer-Information (NAM) in Abhängigkeit eines Betriebszustands der ersten Endeinrichtung (EG1) temporär auf dem Anzeigefeld (D1) ausgegeben wird.

10. Kommunikationssystem mit mindestens einer Endeinrichtung (EG1), welche belegbare Tasten (T1) und den Tasten (T1) zugeordnete Anzeigefelder (D1) aufweist, einer zentralen Kommunikationseinrichtung (PBX) und einem Directory-Service (LDAP), wobei
über die zentrale Kommunikationseinrichtung (PBX) Verbindungen zu einer zweiten Endeinrichtung (EG2) herstellbar sind, und für die zweite Endeinrichtung (EG2) eine Adresse (RUNO) übermittelt wird,
**dadurch gekennzeichnet,**
**dass** mittels einer CTI-Applikation (CTIA) das Verfahren gemäß einem der Ansprüche 1-9 durchgeführt wird.

11. Endeinrichtung für ein Kommunikationssystem noch Anspruch 10, mit Tasten (T1) und den Tasten (T1) zugeordneten Anzeigefeldern (D1) zur Durchführung des Verfahrens gemäß einem der Ansprüche 1-9.

## Claims

1. Method for allocating a key (T1) and a display field (D1) assigned to the key (T1) of a first terminal device (EG1) of a first subscriber, wherein
- an address (RUNO) which identifies a second terminal device (EG2) is recorded which is assigned to the key (T1) as a destination address for a future establishment of a connection
- associated subscriber information (NAM) is determined for the recorded address (RUNO),
- the determined subscriber information (NAM) is assigned to the display field (D1),
**characterised in that**
the recording and allocation are carried out as a result of a user input of the first subscriber and
that the address (RUNO) is recorded in the framework of a communication connection (RUF) initiated with the second terminal device (EG2), and
- that the address (RUNO) and the subscriber information (NAM) remain assigned to the key (T1) or the display field (D1) beyond the end of the communication connection (RUF).

2. Method according to Claim 1, **characterised in that** subscriber information (NAM) is determined for the recorded address (RUNO) via an access to a directory service (LDAP).

3. Method according to Claim 2,
**characterised in that**
the directory service (LDAP) is accessed by the first terminal device (EG1) or via a CT1 application (CTIA) coupled to the first terminal device (EG1).

4. Method according to one of the preceding claims, **characterised in that** the key (T1) can be allocated in a second level, and as a result of the user input of the first subscriber,
i. a second piece of associated subscriber information and an associated second address are determined for the recorded address (RUNO),
ii. the determined second address of the second level of the key (T1) is assigned as a second destination address for a future establishment of a connection, and
iii. the determined second subscriber information is assigned to the display field (D1) for the second level of the key (T1).

5. Method according to Claim 4,
**characterised in that**
the recorded address (RUNO) is a fixed network address and the determined second address is a mobile telephone address.

6. Method according to one of the preceding claims,
**characterised in that**
a central communication device (PBX) assigned to the first terminal device (EG1) updates a key memory for the key (T1) with the recorded address (RUNO) and the determined subscriber information (NAM).

7. Method according to one of the preceding claims,
**characterised in that**
a workstation computer is assigned to the first terminal device (EG1) and the determined subscriber information (NAM) assigned to the display field (D1) is displayed on an output unit of the workstation computer.

8. Method according to one of the preceding claims,
**characterised in that**
the determined subscriber information (NAM) is assigned to the display field (D1) in an editable manner and the subscriber information (NAM) can be modified by the first subscriber and the modification is concluded by a further user input.

9. Method according to one of the preceding claims,
**characterised in that**
the subscriber information (NAM) assigned to the display field (D1) is output temporarily on the display field (D1) as a function of an operating status of the first terminal device (EG1).

10. Communication system with at least one terminal device (EG1), which has allocatable keys (T1) and display fields (D1) assigned to the keys (T1), a central communication device (PBX) and a directory service (LDAP), wherein
connections to a second terminal device (EG2) can be produced via the central communication device (PBX), and an address (RUNO) is transmitted for the second terminal device (EG2),
**characterised in that**
the method according to one of Claims 1-9 is carried out by means of a CT1 application (CTIA).

11. Terminal device for a communication system according to Claim 10, with keys (T1) and display fields (D1) assigned to the keys (T1) for carrying out the method according to one of Claims 1-9.

## Revendications

1. Procédé pour assigner une touche (T1) et un champ d'affichage (D1), attribué à la touche (T1), d'un premier terminal (EG1) d'un premier abonné téléphonique, sachant que
- il est détecté une adresse (RUNO), identifiant un deuxième terminal (EG2), qui est affectée à la touche (T1) en tant qu'adresse cible pour un futur établissement de liaison,
- il est déterminé pour l'adresse (RUNO) détectée une information d'abonné associée (NAM),
- l'information d'abonné (NAM) déterminée est affectée au champ d'affichage (D1),
**caractérisé**
**en ce que** la détermination et l'assignation sont effectuées suite à une entrée d'utilisateur du premier abonné et
**en ce que** l'adresse (RUNO) est détectée dans le cadre d'une liaison de communication (RUF) initiée par le deuxième terminal (EG2), et
- **en ce que** l'adresse (RUNO) et l'information d'abonné (NAM) restent affectées à la touche (T1) respectivement au champ d'affichage (D1) après la fin de la liaison de communication (RUF) .

2. Procédé selon la revendication 1, **caractérisé en ce que** la détermination de l'information d'abonné (NAM) pour l'adresse détectée (RUNO) est effectuée par le biais d'un accès à un service d'annuaires (LDAP).

3. Procédé selon la revendication 2,
**caractérisé en ce**
**que** l'accès au service d'annuaires (LDAP) est effectué par le premier terminal (EG1) ou par le biais d'une application CTI (CTIA) couplée au premier terminal (EG1).

4. Procédé selon l'une quelconque des revendications précédentes, **caractérisé en ce que** la touche (T1) peut être assignée dans un deuxième niveau, et,
**en ce que**, suite à l'entrée d'utilisateur du premier abonné,
i. il est déterminé pour l'adresse (RUNO) détectée une deuxième information d'abonné associée et une deuxième adresse associée,
ii. la deuxième adresse déterminée du deuxième niveau de la touche (T1) est affectée en tant qu'adresse cible pour un futur établissement de liaison, et
iii. la deuxième information d'abonné associée est affectée au champ d'affichage (D1) pour le deuxième niveau de la touche (T1).

5. Procédé selon la revendication 4,
**caractérisé en ce**
**que** l'adresse (RUNO) détectée est une adresse de réseau fixe et la deuxième adresse détectée est une adresse de radiocommunication.

6. Procédé selon l'une quelconque des revendications précédentes,
**caractérisé en ce**
**qu'**un dispositif de communication central (PBX) attribué au premier terminal (EG1) actualise une mémoire de touche destinée à la touche (T1) avec l'adresse (RUNO) détectée et l'information d'abonné (NAM) déterminée.

7. Procédé selon l'une quelconque des revendications précédentes,
**caractérisé en ce**
**qu'**un calculateur de poste de travail est attribué au premier terminal (EG1) et l'information d'abonné (NAM) déterminée, affectée au champ d'affichage (D1), est affichée sur une unité de sortie du calculateur de poste de travail.

8. Procédé selon l'une quelconque des revendications précédentes,
**caractérisé en ce**
**que** l'information d'abonné (NAM) déterminée est affectée de manière modifiable au champ d'affichage (D1) et l'information d'abonné (NAM) peut être modifiée par le premier abonné et la modification est terminée par une autre entrée d'utilisateur.

9. Procédé selon l'une quelconque des revendications précédentes,
**caractérisé en ce**
**que** l'information d'abonné (NAM) affectée au champ d'affichage (D1) est sortie temporairement sur le champ d'affichage (D1) en fonction d'un état de fonctionnement du premier terminal (EG1).

10. Système de communication pourvu au moins d'un terminal (EG1), qui comporte des touches pouvant être assignées (T1) et des champs d'affichage (D1) attribués aux touches (T1), d'un dispositif de communication central (PBX) et d'un service d'annuaires (LDAP),
sachant que des liaisons à un deuxième terminal (EG2) peuvent être établies par le biais du dispositif de communication central (PBX) et une adresse (RUNO) est transmise pour le deuxième terminal (EG2),
**caractérisé en ce**
**que** le procédé est exécuté selon une des revendications 1 à 9 au moyen d'une application CTI (CTIA).

11. Terminal pour un système de communication selon la revendication 10, ayant des touches (T1) et des champs d'affichage (D1) attribués aux touches (T1) permettant d'effectuer le procédé selon une des revendications 1 à 9.
